(19) Europäisches Patentamt
European Patent Office
Office européen des brevets

(11) Publication number: **0 368 649**
**A1**

## (12) EUROPEAN PATENT APPLICATION

(21) Application number: 89311584.0

(22) Date of filing: 09.11.89

(51) Int. Cl.⁵: **B01D 53/04, F02G 3/00, F25B 9/00, F23C 11/04**

(30) Priority: **10.11.88 GB 8826378**

(43) Date of publication of application:
**16.05.90 Bulletin 90/20**

(84) Designated Contracting States:
**AT BE CH DE ES FR GB GR IT LI LU NL SE**

(71) Applicant: **THE HASER COMPANY LIMITED**
**Moray House 16 Bank Street**
**Inverness, 1V1 1QY Scotland(GB)**

(72) Inventor: **Wells, Alan Arthur**
**Grove House Mepal**
**Ely Cambridgeshire, CB6 2AR(GB)**

(74) Representative: **Rackham, Stephen Neil**
**GILL JENNINGS & EVERY 53-64 Chancery Lane**
**London WC2A 1HN(GB)**

(54) Pressure swing gas separation.

(57) A pressure swing gas separator is operated with a pressure difference between its presurised and depressurised states of less than 0.1 bar. Preferably it operates at a repetition frequency greater than one cycle per second and preferably between 50 and 200 cycles per second. Preferby the pressure swing gas separator includes a bed of adsorbent material (16, 108, 147) and forms part of a resonant system. Means (1, 101, 140, 141) are included operating at the resonant frequency of the resonant system, to pressurise and depressurise the bed of adsorbent material (16, 108, 147) so that the pressure energy of the desorbed gas mixture is substantially recovered. The means may include a tuned diaphragm (109, 133, 141) adjacent but spaced from one face of the bed of adsorbent material (16, 108, 147), driving means (1, 101, 150) arranged to drive the diaphragm (109, 133, 141) at its resonant frequency towards and away from the bed of adsorbent material (16, 108, 147), valve means (110, 115, 131) to introduce a gas mixture to and exhaust a depleted gas mixture from, a space between the diaphragm (109, 133, 141) and the bed (16, 108, 147), and a gas outlet (112, 113, 149) in communication with the other face of the adsorbent bed (16, 108, 147). In use, the movement of the diaphragm towards and away from the adsorbent bed pressurises and depressurises it.

Fig.3.

EP 0 368 649 A1

AIR INTAKE     EXHAUST     AIR INTAKE

Xerox Copy Centre

## Pressure Swing Gas Separation

Pressure swing gas separators include a bed of adsorbent material which preferentially adsorbs at least one gas from a mixture of gases. A pressure swing gas separator uses this preferential adsorption to preferentially remove that gas from a mixture of gases either to provide a gas mixture having a higher concentration of the preferentially adsorbed gas or a depleted gas mixture which has a lower concentration of the preferentially adsorbed gas. In such pressure swing gas separators the adsorbent bed is pressurised with the gas mixture and the preferentially adsorbed component is adsorbed onto the bed until the bed is saturated with that one component of the gas mixture. The bed is then vented and the gas mixture depleted by the preferentially adsorbed component is discharged. The bed is then subjected to a reduced pressure and under these circumstances the gas adsorbed onto the bed is desorbed to produce a gas which is rich in the gas which is preferentially adsorbed.

Recently lots of work has been carried out in this field particularly in the so called rapid pressure-swing adsorption regime where the cycle time of the above operation is typically less than 30 seconds and where the adsorbent bed is arranged so that the mixture of gases is introduced into the bed from one side and the gas mixture rich in the preferentially adsorbed component is removed from that same side after desorbtion but the gas or gases which are not preferentially adsorbed onto the adsorbent bed are removed from the opposite side of the adsorbent bed which is continuously vented. Examples of such systems are described in EP-A-0008619; EP-A-0013680; and EP-A-0055160.

According to a first aspect of this invention a pressure swing gas separator is operated with a pressure difference between its pressurised and depressurised states of less than 0.1 bar.

With existing rapid pressure swing adsorption gas separators the bed is subjected to a pressure swing of at least half and more usually two-thirds of a bar. A considerable amount of energy is required to provide such a large pressure swing. By operating the pressure swing gas separator in accordance with the first aspect of this invention over a very much lower pressure difference and over a pressure difference of less than 0.1 bar very much less energy is required although, typically, on each pressure swing, a lower volume of gas is produced.

According to a second aspect of this invention the pressure swing gas separator is operated at a repetition frequency greater than one cycle per second.

Preferably the pressure swing gas separator operates at a repetition frequency greater than 10 cycles per second and typically operates at a repetition frequency of between 50 and 200 cycles per second. Accordingly, a pressure swing gas separator in accordance with a second aspect of this invention is very much faster than the earlier proposals for rapid pressure swing adsorption by a factor of as much as one thousand. Preferably the pressure swing gas separator includes a combination of both the first and second aspects of this invention and, under these circumstances the high repetition frequency of its operation more than makes up for the low volume of gas produced in each cycle. A combination of the first and second aspects of this invention provide a good throughput of gas with only a low energy requirement.

According to a third aspect of this invention a pressure swing gas separator includes a bed of adsorbent material and forms part of a resonant system, the pressure swing gas separator including means operating at the resonant frequency of the resonant system to pressurise and depressurise the bed of adsorbent material so that the pressure energy of the desorbed gas mixture is substantially recovered.

By using a resonant system in accordance with the third aspect of this invention much of the energy of compression is conserved since it is possible to conserve the pressure energy contained in the gas component scavenged from the one side of the bed. With the arrangement in accordance with the third aspect of this invention it is substantially only the friction losses in the adsorbent bed which are lost. Accordingly, a further reduction in the amount of energy required to operate a pressure swing gas separator is achieved in accordance with this aspect of the present invention.

Preferably the first three aspects of this invention are combined. The inventor of this application has coined the expression "acoustic pressure swing gas separation" to describe this system.

EP-A-0267727 describes and claims a gas resonance device comprising a resonance tube which expands in cross-section along its length from one end to the other, a heat source located at one end of the resonance tube, and means to trigger oscillations in a gas in the resonance tube. The resonance tube is preferably of ogival form and the heat source and means that trigger oscillations in a gas in the resonance tube are preferably formed by a pulsed combustor having a pulse repetition frequency corresponding to a resonance frequency of the gas resonance tube. The pressure waves generated by such a thermally driven gas resonance device are described and claimed to operate a pressure swing gas separator.

The second and third aspects of this invention do not include the combinations disclosed and claimed in EP-A-0267727.

According to a fourth aspect of this invention a pressure swing gas separator includes a bed of adsorbent material, a tuned diaphragm adjacent but spaced from one face of the bed of adsorbent material, driving means arranged to drive the diaphragm at its resonant frequency towards and away from the bed of adsorbent material, valve means to introduce a gas mixture to and exhaust a depleted gas mixture from, a space between the diaphragm and the bed, and a gas outlet in communication with the other face of the adsorbent bed, in use, the movement of the diaphragm towards and away from the adsorbent bed pressurising and depressurising it.

The drive means may be formed by a thermally driven gas resonance device as described in EP-A-0267727 or may be formed by a gas resonance device comprising a pulsed combustor located in the middle of a substantially spherical resonance chamber. Such a thermally driven gas resonance device has the advantage that the wall friction losses discussed in EP-A-0267727 are eliminated altogether. The pulsed combustor produces a substantially spherical expanding wave front which encounters no wall friction whatsoever as it moves from the middle of the resonance chamber to the outside of the resonance chamber.

Preferably the gas resonance device includes means to provide an explosive gas mixture to the pulsed combustor. Preferably the pulsed combustor has a pulse repetition frequency corresponding to the resonant frequency of the substantially spherical resonance chamber which, largely, is dependent upon its radius. The means to supply the explosive mixture to the pulsed combustor may itself include a tuned valve or a resonance tube so that the pulsed combustor receives a pulsed supply of explosive mixture. In this case the explosive mixture is preferably supplied at the resonance frequency of the substantially spherical resonance chamber.

Preferably the pressure swing gas separator comprises a bed of molecular sieve material located at the periphery of the substantially spherical resonance chamber. Preferably the resonance chamber is formed as an icosahedron. In this case each bed of molecular sieve material preferably has a generally circular configuration with the beds being located in the side wall of the resonance chamber with three circular beds contained wholly within each substantially triangular segment of the icosahedron and one bed at each point of the iscosahedron.

The use of a diaphragm separating the inside of the resonance chamber from the bed of molecular sieve material may be used with resonance chambers that are generally conical as described in EP-A-0267727 or with resonance chambers that are substantially spherical. The mechanical oscillations of the gas cause corresponding oscillation of the diaphragm but the diaphragm provides a physical barrier which separates the bed of adsorbent material from the inside of the resonance chamber and so prevents combustion products from the pulsed combustor contaminating the bed of adsorbent material. Preferably the diameter, thickness and stiffness of the diaphragm are selected so that the diaphragm has a natural resonant frequency corresponding to that of the resonance chamber.

The drive means may be formed by an electrical actuator. In this case, it is preferred that the electrical actuator comprises an armature coil and a stator one of which is connected to the diaphragm and the other of which is held by a fixed surrounding framework, in use, an oscillating current applied to the armature causing the armature, and hence the diaphragm, to oscillate with respect to the stator. The stator may be formed by a permanent magnet but is preferably formed by an electromagnet. When the electrical actuator is powered from the mains it is preferred that the diaphragm is tuned to the mains frequency of 50 or 60 Hz and that the device is driven from a single phase supply.

The drive means may, alternatively, be formed by a motor, either an electric motor, or an internal combustion engine. In this case the diaphragm may be coupled to a rotary shaft of the motor via a crank or other eccentric connection or the motor may be mounted on the diaphragm and be arranged to rotate an unbalanced load.

Preferably the valve means to introduce gas mixture into, and exhaust gas mixture from, the space between the diaphragm and the adsorbent bed comprises an annular valve seat which engages the diaphragm and the diaphragm forms the valve closure member which forms a gas-tight seal against the annular diaphragm but which, when the diaphragm moves away from the adsorbent bed unseats to allow gas to pass between the seat and the diaphragm.

The valve means may include an exhaust valve located in the middle of the diaphragm so that the gas mixture moves radially inwards from the annular valve seat towards the middle of the diaphragm. In this case the exhaust valve is arranged to open after the inlet valve but closes at substantially the same time as the inlet valve. One way of achieving this is to have the exhaust valve closure member free to slide within limits on a spindle mounted on the diaphragm so that, in use, as the exhaust valve closure member moves with the diaphragm away from the adsorbent bed it is in a first position on the spindle but as it moves with the diaphragm towards the adsorbent bed it is in a second position on the spindle.

Alternatively the valve formed by the annular valve seat and the dipahragm acts as both an inlet and an exhaust valve. In this case it is preferred that a harmonic vibration is applied to the diaphragm so that, in addition to its fundamental oscillation towards and away from the adsorbent bed there is also a superimposed secondary vibration which appears as a wave moving from one side to the other of the diaphragm. In this way as the diaphragm is moving away from the bed one side of the diaphragm lifts from its annular seat initially. A reduced pressure generated in the bed whilst the diaphragm is moving away from it draws gas mixture into the space between the diaphragm and the bed via the unseated diaphragm valve seat on the one side of the diaphragm. After a delay the other side of the dipahragm also unseats from the annular seat. The gas introduced into the one side of the diaphragm has a sideways momentum which is continued and encouraged by the flexing of the diaphragm and causes a gas flow from the one side to the other side of the diaphragm which causes the depleted gas from the space between the bed and the diaphragm to be exhausted from the other side of the diaphragm. As the diaphragm returns towards the adsorbent bed the one side of the diaphragm seats first against the annular valve seat followed by the other side. As the diaphragm continues to move towards the adsorbent bed it pressurises the bed and then moves away from the bed to depressurise it whereupon the one side of the diaphragm again lifts from its valve seat first and the cycle is repeated. In this way not only is a pressurising and depressurising operation carried out on the adsorbent bed by the fundamental oscillation of the diaphragm but also, as a result of the harmonic oscillation imposed upon the diaphragm, a transverse wave motion on the diaphragm is created which drives the gas transversely across the top of the adsorbent bed. This provides particularly effective scavenge operation which scavenges the depleted gas mixture from the top of the bed on each oscillation of the diaphragm.

This additional harmonic motion can be applied to the diaphragm by, for example, applying an eccentric mass to one side of the diaphragm, preferably matched by a corresponding lightening of the diaphragm on the other side. This is particularly useful when the diaphragm is driven by a heat engine. Alternatively when the diaphragm is driven by an electrical actuator or a mechanical connection this is located off centre. When the diaphragm is driven via a crank this additional harmonic oscillation can also be achieved by directly coupling one end of the crank to the diaphragm so that the angular tilting of a connecting rod connecting the crank to the diaphragm is applied directly to and results in a corresponding flexing of the diaphragm.

Preferably the pressure swing gas separator in accordance with this invention is arranged so that, in use, the gas mixture enters the bed at a bed entry velocity which is sufficiently low to ensure laminar flow of the gas takes place inside the adsorbent bed. The bed entry velocity at which laminar flow occurs is a function of the particle size of the bed, as will be explained in more detail subsequently, and accordingly, it is preferred that the particle size of the bed is substantially a quarter of a millimetre or less. By establishing laminar flow in the bed firstly the friction losses which occur in the acoustic pressure swing gas separator system are reduced which gives rise to a further reduction in the energy required for separation. However, in addition to this, with laminar flow a more efficient separation occurs between the depleted gas mixture and that which is rich in the gas which is not adsorbed by the adsorbent bed moving from the one face to the other face of the adsorbent bed.

Preferably the adsorbent bed is of a wide and shallow configuration in contrast to the arrangements of adsorbent bed used in the conventional rapid pressure swing adsorption systems in which a relatively narrow but deep bed is required for maximum efficiency. Typically the volume of the material in the adsorbent bed is generally similar to that used in the rapid pressure swing adsorption systems for equivalent production of preferred gas.

Various examples of and a discussion of some of the theory behind gas pressure swing separation in accordance with this invention will now be described with reference to the accompanying drawings, in which:-

Figure 1 is a cross-section through a first example;

Figure 2 is a partially cut-away plan of the first example;

Figure 3 is a section through a first example of gas-separator module;

Figure 4 is a graph showing the displacement with respect to time of the valves of the first example of gas-separator module;

Figure 5 is a section through a second example of gas-separator module;

Figure 6 is a cross-section to an enlarged scale through the diaphragm;

Figure 7 is a series of cross-sections through the diaphragm of the second example of gas-separator module showing how it flexes; and,

Figure 8 is a cross-section through a second example.

A thermally driven gas resonance device comprises a generally spherical chamber 1 and a pulsed combustor 2 positioned centrally within the chamber. The combustor 2 includes a tuned non-return valve such as that described in our earlier application EP-A-0267727. A combustion mixture of air and an appropriate fuel gas is admitted to the chamber 1 via the tuned non-return valve. The combustion mixture is periodically ignited at a frequency matched to the resonant frequency of the spherical chamber 1. A sparking plug is provided in the combustor to cause the initial ignition but subsequently the pulsed combustion is self-sustaining.

As an alternative to the use of a tuned non-return valve in the combustor the combustion mixture may be supplied to the chamber 1 via a resonant gas-supply tube which extends into the chamber 1 and is tuned to supply the combustion mixture in pulses at the required pulse repetition frequency.

The operation of the combustor in the manner described above provides a pulsed heat source at the centre of the chamber 1 which produces a substantially spherical expanding wave front. Since the frequency of the combustor is matched to the resonant frequency of the chamber the combustor drives resonant modes of the chamber, maximising the efficiency with which the heat energy of combustion is converted into the mechanical energy associated with the pressure swings in the gas within the chamber 1. In the first example described this mechanical energy is used to drive a gas separator used for oxygen enrichment.

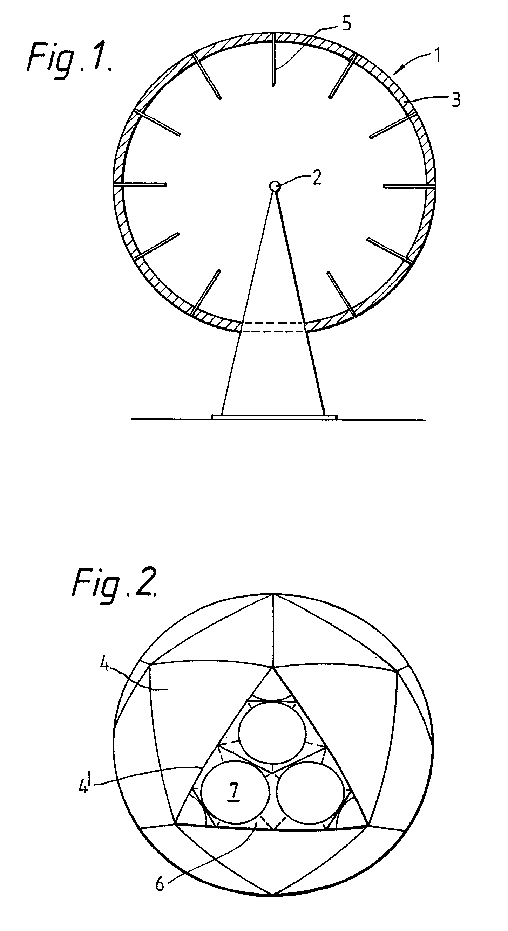

In the first example of the present invention shown in Figures 1 and 2 the generally spherical chamber 1 is defined by a hollow icosohedral shell 3 formed of generally triangular elements 4. Open-ended exhaust tubes 5 extend into the chamber 1 from the outer surface of the shell 3. The radially innermost ends of the tubes 5 lie at points spaced from the centre of the spherical chamber 1 by about three-quarters of the sphere radius. There is a pressure null point in the resonant mode of the chamber at this radius. Combustion products can therefore be vented from the chamber 1 at these points with minimum power loss and external noise. If it is required to take the exhaust further away from the chamber 1 then the tubes 5 may project beyond the surface of the shell 3.

Pipes connected to an external water supply (not shown) are positioned concentrically within the exhaust tubes 5. These pipes provide inwardly directed water sprays. A small proportion of the water is converted to steam by the heat source during thermal pulses and so supplements the production of mechanical power. The remaining mist of water droplets cools the gases in the chamber during the subsequent expansion cycle, prior to recompression, so removing excess heat energy and further increasing the efficiency of the device. Heated water aggregated from water droplets returned to the internal spherical surface of the chamber 1 is drained away at the base and may be cooled and recirculated.

The modules in the chamber 1 are formed as gas-separator modules such as that shown with its outer surface cut-away in the element 4′ of Figure 2. Each gas-separator module comprises a number of circular elements 7, each element 7 comprising a dished zeolite bed 8 and a diaphragm 9 covering the bed 8 on its inwardly facing surface. Each element 7 is 0.8 metres in diameter and up to 72 such elements may be provided across the inner surface of a chamber 1 or 2 metres radius. In use, the pressure-swings at the periphery of the chamber 1 drive the diaphragm 8 back and forth in the radial direction, that is the direction transverse to the surface of the bed 8. Air is drawn in through an annular inlet 10 surrounding the periphery of the bed 8 and driven through the bed 8 in the manner described in further detail below. Oxygen-enriched gas leaving the bed 8 at its lower surface is collected under a skirt 11 and transferred via ducts 12 to the tubular framework 13 of the icosohedral shell 3. The tubular framework 13 is connected in common to all the gas separator modules 6 and provides a path from the modules 6 to an outlet (not shown) from which the the oxygen-enriched gas is piped away.

As well as serving to isolate the zeolite bed 8 from the combustion gases within the chamber 1 the diaphragm 9 also serves to provide a valving arrangement which ensures that air is admitted and depleted air exhausted at appropriate points in the oscillatory cycle. The diaphragm 9 is dimensioned to have the same resonant frequency as the chamber 1. In the present example the diaphragm 9 is formed of steel with a diameter of 0.8 metres and a thickness of 6 mm. The diaphragm 9 is suspended at its edges outside the bed 8 so that in its equilibrium position it clears the periphery of the bed 8 but touches the bed 8 at a valve seat 14 formed some 10 cm in from the outer edge of the bed 8. The part of the bed 8 extending radially outwards from this valve seat 14 is sealed so as to be impervious to air and the region of contact between the diaphragm 9 and the bed 8 serves to provide a valve which controls the intake of air from the port 10 to the main part of the bed 8. In the centre of the bed 8 there is a cylindrical exhaust outlet 15 which, when the diaphragm is in its equilibrium position, is sealed by a conical valve member 16. The valve member 16 rides on a spindle 17 fixed to the centre of the diaphragm 9.

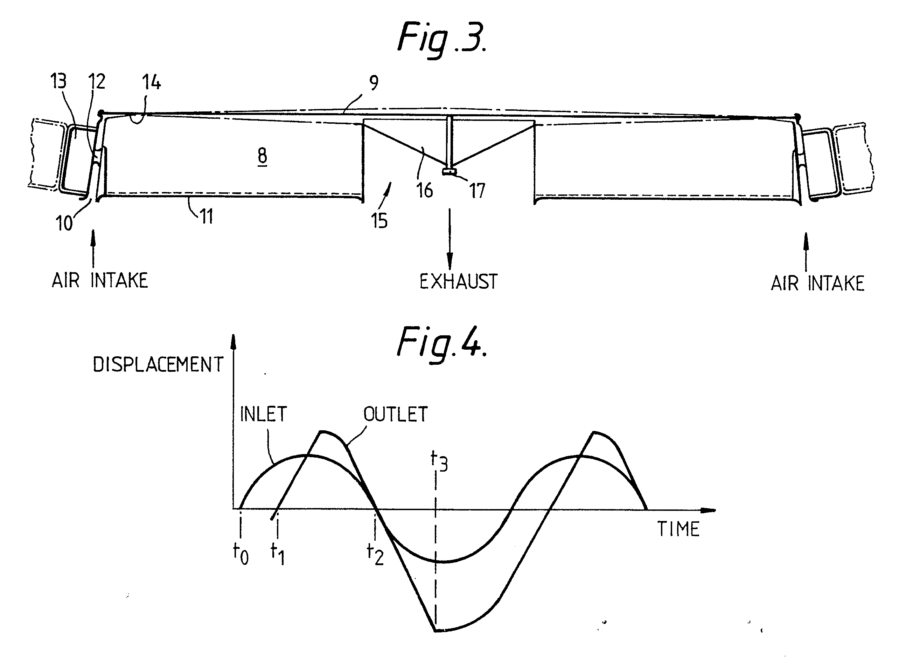

The operational cycle of the pressure-swing gas separator is now described with reference to Figure 4 which shows the displacement of the inlet valve and the outlet valve with respect to time. At time $t_0$ the

diaphragm 9 is in its equilibrium position. Subsequently as the pressure in the gas in the chamber immediately adjacent the diaphragm drops, the diaphragm is drawn back in the radially inwards direction away from the bed 8. The diaphragm 9 immediately clears the seat 14 thereby opening the valve inlet. However the exhaust valve remains closed since there is free movement between the spindle 17 and the valve member 16 so that although the spindle 17 is drawn up the valve member 16 remains seated. As a result during the period $t_0$ to $t_1$ a partial vacuum is created under the diaphragm 9 which draws in and accelerates air from the inlet 10 over the seat 14. At time $t_1$ as the diaphragm 9 moves further upwards the end of the spindle 17 engages the valve member 15, unseating it and so opening the exhaust valve. The air drawn under the diaphragm 9 from the inlet 10 is therefore drawn across the bed 8 and its momentum encourages it to continue to move radially in to the centre of the bed 8. As it does so it scavenges the depleted air initially present between the bed 8 and the diaphragm 9 and drives it out through the exhaust outlet 15.

Having reached its point of maximum displacement the diaphragm 9 then moves downwards towards the bed 8 again. At time $t_2$ the diaphragm 9 again reaches its equilibrium position and closes the inlet and exhaust valves. It should be noted that although there is a delay between the opening of the inlet and outlet valve resulting from the play on the spindle 17 when they close at time $t_2$ they do so simultaneously. During the subsequent phase of the cycle the pressure under the diaphragm 9 increases driving the fresh air drawn through the annular inlet 10 into the zeolite bed 8. As the air moves forwards through the bed 8 the zeolite acts as a molecular sieve, preferentially adsorbing the nitrogen from the air so that the gas passing out through the bottom of the bed 8 is oxygen enriched/nitrogen depleted. Then from time $t_3$ which is point of maximum displacement in the opposite direction, towards the bed 8, the diaphragm 9 moves back towards its equilibrium position reducing the pressure above the bed 8. Under this reduced pressure nitrogen is desorbed from the bed 8 and drawn back towards the surface. As the diaphragm 9 reaches its equilibrum point the cycle is repeated with the next intake of air driving the oxygen depleted, nitrogen-rich gas from the surface of the bed 8 to the exhaust outlet 15. The cycle accelerates the gas throughout its passage across the face of the bed so that when it reaches the outlet 15 its momentum carries it away from the chamber 1 as a puff of gas which does not mix with the intake to the bed. During successive cycles the oxygen is driven down through the bed to its outer surface where it is conducted away in the manner already described.

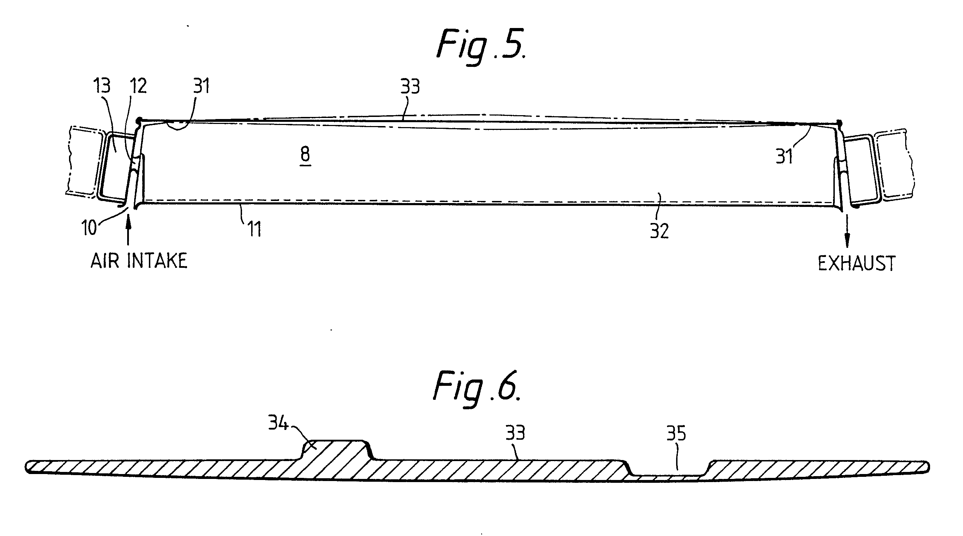

A modification of the gas separator module is shown in Figures 5, 6 and 7. In this example an annular valve seat 31 surrounds a dished bed of adsorbent material 32. A thick tuned diaphragm 33 resonates at the resonance frequency of the substantially spherical chamber 1 (not shown in Figure 5). The bed 32 and annular valve seat 31 are generally similar to the bed 8 and seat 14 of the first example. The diaphragm 33 is unbalanced and includes an added mass 34 on one side and a cut-away portion 35, shown in Figure 6, on its other side. This assymetry in the diaphragm 33 leads to a harmonic oscillation being generated in the diaphragm 33 as it is oscillated backwards and forwards in the radial direction at the fundamental frequency by the spherical wavefronts propagating in the chamber 1. This harmonic oscillation has the form of a transverse wave moving from left to right as shown in Figure 5.

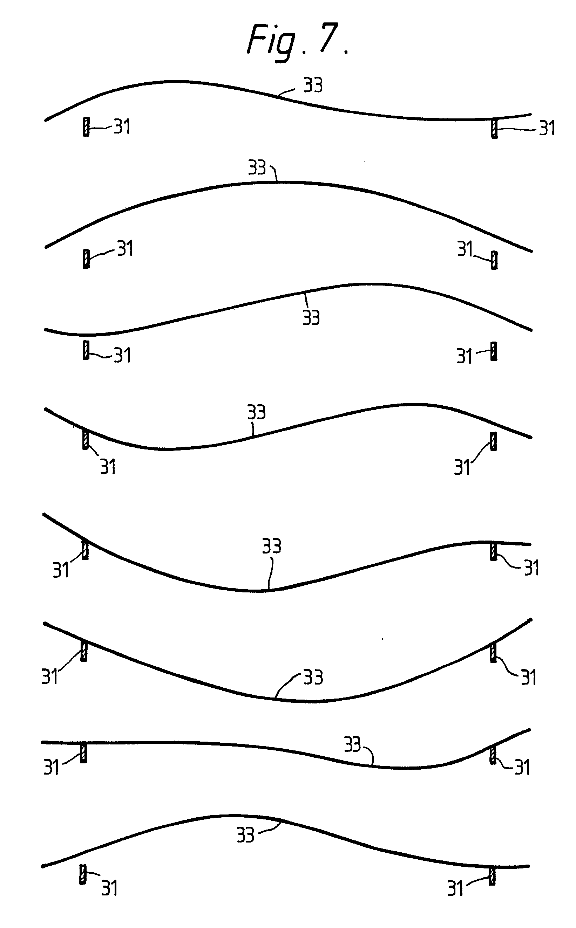

Figure 7 illustrates this effect diagrammatically. In Figure 7 the diaphragm is represented by a line with the amplitude of the transverse oscillation greatly exaggerated to illustrate how, as the diaphragm 33 is moving away from the bed 32, first the left hand side, as shown in Figures 5, 6 and 7 lifts away from the annular seat 31 so allowing fresh air to be drawn in to the gap formed between the diaphragm 33 and the valve seat 31 at the left hand side of the gas separator module. Further movement of the diaphragm 33 away from the adsorbent bed 32 further reduces the pressure above the adsorbent bed 32, draws in more fresh air from the left hand side of the bed 32 and draws out more of the depleted nitrogen rich gas from the bed 32. As the fresh air moves inwards into the space between the bed 32 and diaphragm 33 it has a significant velocity in a direction from left to right as shown in Figures 5 and 6. After reaching its maximum deflection the diaphragm 33 starts to return towards the dished bed 32. Again the left hand side of the diaphragm moves first, as shown most clearly in Figure 7 and this leads to the left hand side of the diaphragm 33 forming a seal with the annular seat 31 at the left hand side of the diaphragm whilst the right hand side of the diaphragm is still out of contact with the right hand side of the annular seat 31, again as shown in Figure 7. The transverse movement of air across the face of the dished bed 32 leads to an effective scavenge of the depleted, nitrogen rich air from the surface of the bed 32 and out of the right hand side of the gas separator module between the right hand side of the annular seat 31 and the diaphragm 33. As the diaphragm 33 continues to move towards the adsorbent bed it eventually seats against the entire circumference of the annular seal 31 so closing the valve and pressurising the fresh air introduced into the module and forcing it into the adsorbent bed 32. After reaching a point of maximum deflection towards the bed 32 the diaphragm again starts to return and move away from the bed 32. Again it is the left hand side of the diaphragm which first lifts from its annular seat 31 to allow fresh air to enter the module from the left hand side and the process is repeated. The transverse wave action that is induced in the diaphragm 33 also encourages the movement of air in the transverse direction from the left hand side to the right hand side of the gas separator module.

A pressure-swing gas separator such as that described above offers both greater efficiency and lower capital costs by comparison with a conventional oxygen production plant such as a cryogenic oxygen recovery unit. A 2 metre radius sphere having its surface entirely covered by gas-separation modules is capable of producing luo tonnes per day of 98% oxygen with an oxygen recovery ratio, that is the ratio by volume of oxygen input to oxygen output, of 100:15 and a specific energy consumption, that is the mechanical energy input required to produce 1 kilogram of oxygen, of 0.125 kW hr/kg. The 98% oxygen mixture produced is suitable for use in industrial processes such as iron and steel-making but may also be used for other purposes such as sewage-treatment or the generation of oxgyen for medical use. For these alternative uses the scale of the device and the concentration of the oxygen produced may be varied to suit the needs of the particular application. Where only low volumes of oxygen are required a gas-separator unit formed by a single circular bed and diaphragm such as that described above may be used in an ogival gas resonance device such as that described in the European application cited above.

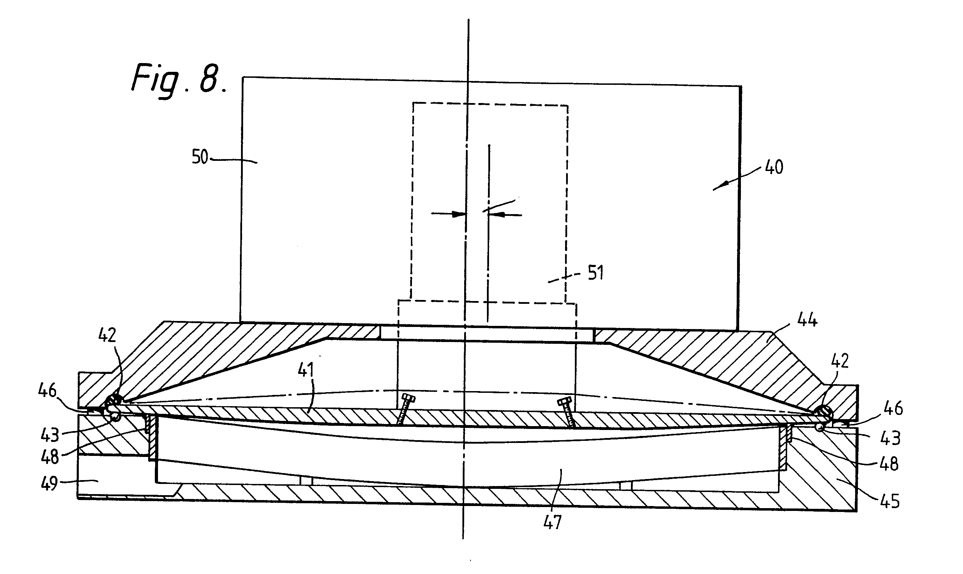

The second example of pressure swing gas separator uses a bed and diaphragm arrangement similar to that described in the modification of the first example but the diaphragm is driven by an electrical actuator 40. The gas separator comprises a diaphragm 41 having its periphery clamped between an O-ring 42 and a number of equiangularly spaced balls 43. The O-ring 42 is received in an annular groove in the top part of a housing 44 whilst the balls 43 are received in the bottom part 45 of the housing. The two halves of the housing are clamped together by bolts 46 to clamping the diaphragm 41 between the O-ring 42 and balls 43. A dished bed 47 filled with adsorbent material is located in the bottom half 45 of the housing and surrounded by an annular seal 48 which extends close to the periphery of the diaphragm 41. A gas outlet 49 in communication with the rear face of the bed 47 leads away from the lower half 45 of the housing. The upper part 44 of the housing supports the electrical actuator 40 which consists of a stator 50 which may be a permanent magnet or preferably, is an electro-magnetic energised by a DC field coil. An armature, 51 formed by a moving coil is connected to the diaphragm 41 eccentrically. Figure 8 illustrates the offset OFF between the centre of the diaphragm and the centre of the armature. The arrangement of the electrical actuator 40 is generally similar to that used for driving loudspeakers.

Typically a single phase mains AC current is connected to the moving coil armature and, in response to the alternating current the armature moves up and down, as shown in Figure 8 to cause the diaphragm to oscillate. The diaphragm is arranged to oscillate at the mains frequency. Because of the lateral offset between the axes of the diaphragm and that of the armature the diaphragm oscillates as described above with reference to Figure 7.


## Outline of theory behind present invention

Adsorption/desorbtion with rising and falling fluid pressure is capable of separation of species, such as nitrogen and oxygen from air using a zeolite molecular sieve in the form of a porous bed of graded or uniformly sized particles. Typically, mixed gases are introduced at the top of the bed, and one component is withdrawn at a lower flow rate at the base of the bed. Throughputs are determined by the required purity of the separated fraction. The energy efficiency of separation is potentially high for provision of separated gas delivered at atmospheric pressure, and is already higher in practical applications than with any of the cryogenic separation routes.

Molecular selectivity is the basis for separations conducted by adsorption and it is known, for instance, that nitrogen is preferentially adsorbed at a zeolite surface because of its different molecular configuration from that of oxygen. The adsorption process is also completely reversible with change of pressure. The molecular selectivity of zeolite for nitrogen from $N_2/O_2$ mixtures is held to be 2.8 over a wide range of pressures at ambient temperatures. Since molecular processes are intrinsically fast, it is evident that rates of adsorption are limited by diffusion rather than molecular adsorption, since inert components such as argon in air are invariably present and effectively form a barrier between the nitrogen and the adsorbent bed. Furthermore, since adiabatic compression is also reversible, much of the energy of compression may be conserved if a resonant acoustic pressurisation system is used, so that the two dominant factors with regard to energy efficiency in the improved process are likely to be frictional flow resistance in the bed, coupled with scavenge flow resistance at atmospheric pressure at the top of the bed. These factors are now examined.

7

Selective adsorption

The adsorption of two species B and C of similar densities at a clean surface is considered to be governed by the product of the molecular selectivity s and the relative rates of arrival of the species at the surface, in terms of an inert boundary layer of species A and thickness $\delta$ impeding the flow to the surface, and the mutual diffusivity D of the other two species through this boundary layer. Stefan's law indicates that the overall mass diffusion rate q per unit area of adsorbed species at the interface is,

$$q = -\frac{D\rho_o}{\delta} \ln c_A \qquad [1]$$

where $\rho_o$ is the overall density and $c_A$ is the small fractional concentration of the inert species A. (The negative sign accounts for the negative logarithm). A qualitative evaluation of equation [1] shows that comparatively high rates of adsorption can be foreseen in an adsorption bed of small particles.

Ignoring density differences, if the species B and C are present as fractional volume concentrations $c_B$ and $c_C$ (such that $c_B + c_C + c_A = 1$) it may be postulated that the effect of the molecular selectivity s, referring to species B and C respectively, is that

$$\frac{q_B}{q} = \frac{sc_B}{sc_B + c_C} \quad , \quad \frac{q_C}{q} = \frac{c_C}{sc_B + c_C} \quad , \quad \text{and} \quad q_B + q_C = q \qquad [2]$$

Equation [2] demonstrates that the instantaneous effective selectivity $\sigma$ in the presence of the boundary layer is simply,

$$\sigma = \frac{q_B}{q_C} = \frac{sc_B}{c_C} \qquad [3]$$

which exceeds s at the start of the process and is progressively reduced.

In order to follow the changes of concentration it is necessary to postulate an initial volume V of mixed gases approaching the interface, progressively reduced in time by adsorption (density differences between species B and C are ignored, together with $c_A$ at this stage). Then,

$$c_B = \frac{V_B - \int q_B \, dt}{V - qt} \quad , \quad c_C = \frac{V_C - \int q_C \, dt}{V - qt} \quad , \quad c_B + c_C = 1 \qquad [4]$$

Dividing by V, putting $\frac{qt}{V} = x$, where x is the proportion of mixed gas which is adsorbed, and substituting the $q_B$ and $q_C$ from equation [2],

$$c_B = \frac{c_{B.0} - \int \dfrac{sc_B \, dx}{(s-1)c_B + 1}}{1 - x} \quad , \quad c_C = \frac{c_{C.0} - \int \dfrac{c_C \, dx}{(1-s)c_C + s}}{1 - x} \qquad [5]$$

where $c_{B.0}$ and $c_{C.0}$ are initial values. From the first of these, by differentiation and separation of variables,

$$\frac{dx}{1 - x} = -\frac{(s-1)c_B + 1}{(s-1)c_B(1 - c_B)} \cdot dc_B \qquad [6]$$

which leads by integration of both sides and insertion of limits to,

$$1 - x = \left[ \frac{(1 - c_{B,0})^s}{c_{B,0}} \cdot \frac{c_B}{(1 - c_B)^s} \right]^{\frac{1}{s-1}} \qquad [7]$$

Formulation in terms of $c_C$ in equations [5], [6] and [7] leads as expected to an identical result. Equation [7] may be written as

$$1 - x = \left( \frac{k_0}{k_n} \right)^{\frac{1}{s-1}}$$

$$\text{if } k = \frac{(1 - c)^s}{c} \,.$$

Then, for successive pressure swings relating to the non-adsorbed delivery fraction, corresponding with concentration terms $k_0$, $k_1$, $k_2$,....$k_n$, the cumulative value $\overline{1-x}$ is given by,

$$\overline{1 - x} = \left[ \frac{k_0}{k_1} \cdot \frac{k_1}{k_2} \cdot \frac{k_2}{k_3} \cdots \frac{k_{n-1}}{k_n} \right]^{\frac{1}{1-s}} = 1 - x \qquad [8]$$

so that the incremental result is the same as for one pressure swing.

Laminar flow within the bed

The Reynold's numbers for small particles and small velocities being small (<100), an assumption of laminar flow is well-founded. If z is distance below the entry surface of the bed the mass flow per unit area of bed may be defined as $q_0 \frac{dp}{dz}$, where p is pressure excess, and the adsorption mass flow rate is Qp per unit bed volume. Then the pressure decay through the bed is governed by,

$$q_0 \frac{d^2 p}{dz^2} = Qp, \quad \text{such that} \quad p = A e^{-\sqrt{\frac{Q}{q_0}}\, z} \qquad [9]$$

and the active bed depth and proportional flow rate are unchanged whether A is constant or proportional to sin wt (where w is angular frequency and t is time), provided that Q is constant (i.e. not limited by saturation of adsorption) and laminar flow conditions are maintained. This simply expressed and important result demonstrates that operating frequency can be varied within wide limits. It is convenient in the following to put $A = p\, p_0$, where p is non-dimensional and $p_0$ is atmospheric pressure.

In bed volume V, close packed spheres of uniform diameter d each occupy the volume

$\frac{\pi d^3}{6}$ . The number n in volume V with packing space ratio $\eta$ is

$\frac{6\eta V}{\pi d^3}$ . The aggregate surface area in unit volume is

$$\pi d^2 \frac{6\eta}{\pi d^3} = \frac{6\eta}{d} \,,$$

hence the equivalent thickness of parallel channel is

<div align="center">9</div>

$$\frac{(1 - \eta)}{3\eta} d \qquad .$$

Recognising that the dimensions of the area $\frac{6\eta}{q}$ are $\frac{L^3}{L} = L^2$, the attributions of mean path length and channel cross-section width, per unit volume, are $(3\eta)^{\frac{1}{2}}$ and

$$(3\eta)^{\frac{1}{2}} ,$$

respectively, which account for pore volume ration $1^{d-} \eta$ when multiplied together and with channel thickness

$$\frac{(1 - \eta)}{3\eta} d \quad .$$

The effective pressure gradient is then

$$\frac{p'P_o}{(3\eta)^{\frac{1}{2}}}$$

to account for the stretched path, where $p'$ is a non-dimensional pressure gardient.
The laminar flow rate $q = q_0 p'$ is given by,

$$q = \frac{(3\eta)^{\frac{1}{2}}}{d} \cdot \frac{p'P_o P_o}{(3\eta)^{\frac{1}{2}}} \left(\frac{1 - \eta}{3\eta}\right)^3 \frac{d^3}{12\mu} = \frac{p'P_o P_o d^2}{12\mu} \left(\frac{1 - \eta}{3\eta}\right)^3 \qquad [10]$$

where $\mu$ is viscosity, of dimensions $\frac{M}{LT}$.
The corresponding adsorption mass flow rate is given by,

$$Q = \frac{6\eta}{d} \left(\frac{6\eta}{1 - \eta}\right) \frac{p \, P_o D \ln c_A}{d} = \frac{p \, P_o D \ln c_A (6\eta)^2}{d^2 (1 - \eta)} \qquad [11]$$

so that the ratio $\sqrt{\frac{Q}{q_0}} = \frac{1}{a}$ is then given by,

$$a = \left(\frac{1 - \eta}{6\eta}\right)^2 \frac{d^2}{3} \sqrt{\frac{P_o}{\eta \, \mu \, D \ln c_A}} \qquad [12]$$

and the bed entry velocity $v$ by,

$$v = p \frac{1 - \eta}{3\eta} \sqrt{\frac{\eta \, P_o \, D \ln c_A}{\mu}} \qquad [13]$$

It may be noted from equation [12] that active bed depth, which is a multiple of a, is proportional to $d^2$, whereas

from equation [13], v is independent of d. Both expressions show a significant influence of packing ratio $\eta$,

since both active bed depth and v are reduced as $\eta$ is increased.

It may further be noted that average work rate per unit bed area during cyclic operations is

$$\frac{P \ P_o v}{.2} \qquad ,$$

and that the component of specific energy of separation attributed to bed friction (kWhr/m$^3$ of component) is

$$\frac{\pi p}{72(1 - x)} \qquad ,$$

where $1 - x$ is the recovery ratio related to a particular concentration, derived from equation [7]. These expressions continue to be independent of operating frequency, and the specific energy is also independent of v. The relevant expression may be applied similarly to characterise non-resonant separation beds, and is well correlated with results obtained from them. The enhanced economy of resonant operation with much lower pressure amplitudes in accordance with this invention is thereby emphasized.

Bed flow model comparison

Bead volume $= \dfrac{\pi d^3}{6}$

Number of beads $\dfrac{6 n}{\pi d^3}$ per unit volume.

The comparison of results shown below arises from the alternative of a tube nest model (bore diameter D) to the original model envisaging a stack of separated plates. The results are similar, but lead to simpler expressions indicative of smaller adsorptions but larger mass flow rates, entry velocities, and active bed lengths. As such, they are probably optimistic, and the plate model is preferred. The difference is small, about 20%, for the important bed entry velocity criterion V.

Aggregate area $\frac{6n}{d}$ per unit volume.

**Plate Analogy**                              **Tube Analogy**

Channel face area $2 \times \dfrac{3\eta}{d}$    Wall face area $m\pi D = \dfrac{6\eta}{d}$

Channel thickness $\dfrac{1-\eta}{3\eta}d$    Tube volume $\dfrac{\pi D^2}{m\ 4} = 1-\eta$

Channel width $\dfrac{(3\eta)^{\frac{1}{2}}}{d}$    Tube diameter $D = \dfrac{2(1-\eta)}{3\eta}d$

Path length $(3\eta)^{\frac{1}{2}}$    Number of tubes
$$m = \frac{(3\eta)^2}{\pi d^2 (1-\eta)}$$

Pore volume ratio $(1-\eta)$

Boundary layer    Boundary layer
thickness $\dfrac{(1-\eta)}{6\eta}d$    thickness $\dfrac{(1-\eta)}{3\eta}d$

Mass flow rate    Mass flow rate
$$q = \frac{p'p\rho\, o d^2}{12\mu}\left(\frac{1-\eta}{3\eta}\right)^3$$    $$q = \frac{p'p\rho\, o d^2}{8\mu}\frac{(1-\eta)^3}{(3\eta)^3}\ ;\ \left(x\ \frac{9\eta}{2}\right)$$

Mass adsorption    Mass adsorption
$$Q = \frac{p\rho\, oD\ln c_A (6\eta)^2}{d^2(1-\eta)}$$    $$Q = \frac{p\rho\, oD\ln c_A (6\eta)^2}{2d^2(1-\eta)}\ ;\ (x\tfrac{1}{2})$$

$$a = \sqrt{\frac{q}{Q}} = \left(\frac{1-\eta}{6\eta}\right)^2 \frac{d^2}{3}\sqrt{\frac{po}{\eta\mu D\ln C_A}}$$    $$a = \sqrt{\frac{q}{Q}} = \left(\frac{1-\eta}{6\eta}\right)^2 d^2 \sqrt{\frac{po}{\mu D\ln C_A}}\ ;\ (x\ 3\sqrt{\eta})$$

$$V = p\frac{1-\eta}{3\eta}\sqrt{\frac{\eta poD\ln C_A}{\mu}}$$    $$V = p\frac{1-\eta}{2}\sqrt{\frac{poD\ln C_A}{\mu}}\ ;\ \left(x\ \frac{3\sqrt{\eta}}{2}\right)$$

By way of conservatism both models incorporate the maximum possible boundary layer thickness, and neglect adsorption surfaces within the beads. However, they do not account for the irregularities of cross-section of the gas paths, which will have less effect with laminar flow than with turbulent flow.

The distinctions between acoustic pressure swing gas separation and rapid pressure swing adsorption.

The most obvious, but superficial difference is one of frequency, where the rapid pressure swing adsorption system (RPSA) employs sequenced valves to alternately pressurise and depressurise, and the acoustic system uses resonant oscillations in order to conserve the pressure energy contained in the gas component rejected after separation of another component. On this basis the usable frequency bands of the two systems are likely to be contiguous, and without overlap.

The bed loading analysis which this statement supports verifies that smaller pressure swing amplitudes and entry velocities are preferred for the acoustic variant than for RPSA in order to reduce bed friction losses. For a given throughput bed area is therefore larger with the acoustic variant, but is compensated by much less depth. A substantial increase of energy efficiency of separation is obtained in this way for acoustic separation.

The use of small beads (<250 $\mu$m) is preferred for both variants if pure gas is required from the separation. This may be attributed to the preponderance of laminar flow over turbulent flow through the bed in such cases, so that turbulent back-diffusion and therefore loss of the separated component is suppressed. The criterion for laminar flow is a low value of Reynold's number, essentially dependent upon the product of bead size and flow velocity. Laminar flow is therefore better established for the acoustic variant at a given bead size with lower bed entry velocities.

The most fundamental distinction between RPSA and acoustic pressure swing separation by adsorption, is that the former makes use of saturation of adsorption at bed entry conditions, whereas the acoustic variant does not. Thus, with RPSA when pressure is applied it rises quickly and then stays constant at entry for most of the cycle while the bed is charged. A wave of pressure and adsorption then passes down the bed, although with exponential type decay of amplitude. This accounts for the need for comparatively long beds, but extends the throughput. As shown in the analysis, a sufficient degree of adsorption is obtainable at enhanced frequency to obviate the need to make use of saturation, and this is why the acoustic bed can achieve the same volumetric loadings at lower entry pressures and velocities and higher energy efficiencies.

Both variants use a superimposed steady gas flow through the bed to extract the separated component, and the proportion extracted in this way determines its purity. Of necessity therefore, both variants make use of saturation at the low, constant pressure at the base of the bed, since adsorption eventually ceases when pressure is constant at any value.

In summary, the bed loading criterion for acoustic pressure swing separation is entry velocity and not frequency. At high frequencies bed diameters are preferably small in order to limit energy losses from high scavenge velocities.

## Claims

1. A pressure swing gas separator operating with a pressure difference between its presurised and depressurised states of less than 0.1 bar.

2. A pressure swing gas separator operating at a repetition frequency greater than one cycle per second.

3. A pressure swing gas separator including a bed of adsorbent material (16, 108, 147) and forming part of a resonant system, the pressure swing gas separator including means (1, 101, 140, 141) operating at the resonant frequency of the resonant system to pressurise and depressurise the bed of adsorbent material so that the pressure energy of the desorbed gas mixture is substantially recovered.

4. A pressure swing gas separator according to claim 2 or 3, arranged to operate at a repetition frequency of between 50 and 200 cycles per second.

5. A pressure swing gas separator including a bed of adsorbent material (16,108, 147), a tuned diaphragm (109, 133, 141) adjacent but spaced from one face of the bed of adsorbent material (16, 108, 147), driving means (1, 101, 150) arranged to drive the diaphragm (109, 133, 141) at its resonant frequency towards and away from the bed of adsorbent material (16, 108, 147), valve means (110, 115, 131) to introduce a gas mixture to and exhaust a depleted gas mixture from, a space between the diaphragm (109, 133, 141) and the bed (16, 108, 147), and a gas outlet (112, 113, 149) in communication with the other face of the adsorbent bed (16, 108, 147), in use, the movement of the diaphragm towards and away from the adsorbent bed pressurising and depressurising it.

6. A pressure swing gas separator according to claim 3, 4 or 5, in which the drive means operating at the resonant frequency of the system is formed by a pulsed combustor (2, 102) located in the middle of a substantially spherical resonance chamber (101) or at the end of an ogival resonance chamber (1).

7. A pressure swing gas separator according to claim 5, in which the drive means is formed by an electrical actuator (150) comprising an armature coil and a stator one of which is connected to the diaphragm (141) and the other of which is held by a fixed surrounding framework (146), in use, an oscillating current applied to the armature causing the armature, and hence the diaphragm (141), to oscillate with respect to the stator.

8. A pressure swing gas separator according to any one of claims 5, 6 or 7, in which the valve means to introduce gas mixture into, and exhaust gas mixture from, the space between the diaphragm (103, 133, 141) and the adsorbent bed (108, 147) comprises an annular valve seat (131, 148) which engages the diaphragm (103, 133, 141) and the diaphragm (103, 133, 141) forms the valve closure member which forms a gas-tight seal against the annular valve seat (131, 148) but which, when the diaphragm moves away from the adsorbent bed unseats to allow gas to pass between the seat and the diaphragm (103, 133, 141).

9. A pressure swing gas separator according to calim 8, in which the valve formed by the annular valve seat and the diaphragm acts as both an inlet and an exhaust valve, and in which a harmonic vibration is applied to the diaphragm so that, in addition to its fundamental oscillation towards and away from the adsorbent bed there is also a superimposed secondary vibration which appears as a wave moving from one side to the other of the diaphragm.

10. A pressure swing gas separator according to any one of the preceding claims, in which the particle size of the adsorbent bed (16, 108, 147) is substantially a quarter of a millimetre or less.

Neu eingereicht / Newly filed
Nouvellement déposé

Fig.1.

Fig.2.

Neu eingereicht / Newly filed
Nouvellement déposé

EP 0 368 649 A1

## Fig.3.

13 12 14 9

8

10 11 16 17 15

AIR INTAKE     EXHAUST     AIR INTAKE

## Fig.4.

DISPLACEMENT

INLET   OUTLET

$t_3$

$t_0$ $t_1$ $t_2$

TIME

Neu eingereicht / Newly filed
Nouvellement déposé

Fig. 5.

Fig. 6.

EP 0 368 649 A1

# Fig.7.

33

31    31

33

31    31

33

31    31

33

31    31

33

31    31

33

31    31

33

31    31

33

31    31

Neu eingereicht / Newly filed
Nouvellement déposé

Fig. 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | EP-A-8619 (UNION CARBIDE CORP.)<br>* abstract *<br>--- | 1, 2 | B01D53/04<br>F02G3/00<br>F25B9/00 |
| A,D | EP-A-13680 (UNION CARBIDE CORP.)<br>* abstract; claims 1-11 *<br>--- | 1, 2 | F23C11/04 |
| A | US-A-4767314 (MUTCHLER)<br>* abstract *<br>* column 2, lines 52 - 64; figure 1 *<br>--- | 5, 6 | |
| A,D | EP-A-267727 (WELLS)<br>* abstract *<br>* page 5, line 12 - page 6, line 7; figure 1 *<br>--- | 1-6, 8,<br>10 | |
| A | US-A-4732580 (JAIN)<br>---- | | |
| A | FR-A-1382688 (GESELLSCHAFT FUR LINDE'S EISMACHINEN)<br>------ | | |
| | | | **TECHNICAL FIELDS SEARCHED (Int. Cl.5 )** |
| | | | B01D<br>F02G<br>F25B<br>F23C |

The present search report has been drawn up for all claims

| Place of search | Date of completion of the search | Examiner |
|---|---|---|
| THE HAGUE | 19 DECEMBER 1989 | ERNST J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................
& : member of the same patent family, corresponding document

EPO FORM 1503 03.82 (P0401)